# EUROPÄISCHE PATENTSCHRIFT

(11) **EP 1 245 153 B1**
(45) Veröffentlichungstag und Bekanntmachung des Hinweises auf die Patenterteilung: **14.06.2006**
(21) Anmeldenummer: 02005939.0
(22) Anmeldetag: 15.03.2002
(51) Int. Cl.: A01N 43/90, A01N 43/80

(54) **Synergistische biozide Wirkstoffkombinationen, Tetramethylolacetylendiharnstoff und zwei oder mehrere Isothiazoline-3-onen enthaltend, und Verwendungen solcher Wirkstoffkombinationen als Konservierungsmittel**
Synergistic preservative combinations of biocidal compounds comprising tetramethylol acetylendiurea and two or more isothiazoline-3-ones
Combinaisons synergistiques de principes biocides comprenant tetramethylol acetylendiurée et deux ou plus isothiazoline-3-ones, et leur utilisation comme conservateurs

(30) Priorität: 16.03.2001 DE 10112755
(43) Veröffentlichungstag der Anmeldung: 02.10.2002
(73) Patentinhaber: Bode Chemie GmbH & Co., 22525 Hamburg (DE)
(72) Erfinder: Anker, Willem, Dr., 25474 Ellerbek (DE); Arend, Björn, 22457 Hamburg (DE); Hombeck, Marc, Dr., 22303 Hamburg (DE)
(74) Vertreter: Hansert, Reiner M.

(56) Entgegenhaltungen:
- EP-A- 0 375 367
- US-A- 4 725 611

## Beschreibung

Die vorliegende Erfindung betrifft synergistische biozide Wirkstoffkombinationen, Zusammensetzungen, solche Wirkstoffkombinationen enthaltend, und Verwendungen solcher Zusammensetzungen als Konservierungsmittel zu Stoffen und Stoffgemischen, die von schädlichen Mikroorganismen befallen werden können.

Insbesondere betrifft die Erfindung die Verwendung solcher biozider Wirkstoffkombinationen als Gebindekonservierungsmittel, bevorzugt für wäßrige Dispersionen, insbesondere Polymerdispersionen und dergleichen, aber auch für den Einsatz in Anstrichmitteln, Putzen, Ligninsulfonaten, Kreideaufschlämmungen, Klebstoffen, Photochemikalien, caseinhaltigen Produkten, stärkehaltigen Produkten, Bitumenemulsionen, Tensidlösungen, Kraftstoffen, Reinigungsmitteln, kosmetischen Produkten, Wasserkreisläufen, Polymerdispersionen und Kühlschmierstoffen gegen den Befall durch beispielsweise Bakterien, filamentöse Pilze, Hefen und Algen.

Der Begriff "Polymerdispersion" ist eine Sammelbezeichnung für Dispersionen (Latices) von feinverteilten natürlichen und/oder synthetischen Polymeren (übliche Teilchengröße 0,05-5 mm) in üblicherweise wäßrigen, seltener nichtwäßrigen Dispersionsmitteln. Eingeschlossen sind damit Dispersionen von Polymeren wie Natur- (Kautschuklatex) und Synthesekautschuk (Syntheselatex), wie auch von Kunstharzen (Kunstharzdispersionen) und Kunststoffen (Kunststoffdispersionen) wie Polymerisaten, Polykondensaten und Polyadditionsverbindungen. Man unterscheidet Primärdispersionen, bei welchen die Polymerisation der Basis-Monomeren direkt in der flüssigen Phase erfolgt (Suspensionspolymerisation oder Emulsionspolymerisation, z. B. von Vinylacetat od. Acrylaten) und Sekundärdispersionen, bei welchen vorgefertigte Polymere in einem zweiten Verfahrensschritt dispergiert werden (z. B. von Polyisobuten, Siliconharzen, Polyurethanen, Polyvinylethern).

Polymerdispersion finden Verwendung in Anstrichstoffen (Dispersions-, Latex-, Binderfarben), im Bauten- und Korrosionsschutz, in der Papier-, Textil- und Teppichbeschichtung, für Latexschaumformteile, als Klebstoffe und dergleichen mehr.

Wegen des oftmals hohen Gehaltes an organischem Material, welches in wäßrigem Milieu vorliegt, bieten Polymerdispersionen einen guten Nährboden für bestimmte Mikroorganismen. Es empfiehlt sich daher, sie durch ein Konservierungsmittel vor dem Befall und Verderb zu schützen.

Konservierungsmittel sind antimikrobielle Substanzen, die beim Herstellungsprozeß einem Produkt (Nahrungs- oder Genußmittel, pharmazeutische, kosmetische oder auch chemisch-technische Zubereitungen) in geringen Mengen (gewöhnlich je nach Produkt zwischen ca. 0,0005 % und 1 % Aktivgehalt) zugesetzt werden. Konservierungsmittel sollen Produkte während der Herstellung, der Lagerung und des Gebrauchs vor Verunreinigungen durch Mikroorganismen insbesondere vor den mikrobiell bedingten nachteiligen Veränderungen schützen.

Die meisten für eine Konservierung vorgeschlagenen bzw. vorgesehenen Konservierungsmittel wirken bakteriostatisch und fungistatisch, gelegentlich auch bakterizid und fungizid: sie sollen geruch- und geschmacklos und in den zur Anwendung kommenden Dosen nach Möglichkeit löslich, nicht toxisch, hautverträglich und ausreichend wirksam sein. Die Konservierungsmittel müssen, um wirksam zu sein, in dem zu konservierenden Roh- oder Hilfsstoff gelöst sein. Da die meisten Konservierungsmittel besser fett- als wasserlöslich sind, muß damit gerechnet werden, daß z. B. in einer Emulsion, deren wäßrige Phase konserviert werden soll, das in die wäßrige Phase eingearbeitete Konservierungsmittel im Verlauf der Lagerung in die Fettphase auswandert und damit die Konservierung der wäßrigen Phase in Frage gestellt ist. Aus diesem Grunde empfiehlt es sich, eine Kombination von Konservierungsmitteln einzusetzen, d. h., die wäßrige Phase mit einem gut wasserlöslichen Konservierungsmittel, die Fettphase dagegen gleichzeitig mit einem fettlöslichen Konservierungsmittel zu konservieren.

Biozide Mittel werden zur Bekämpfung von schädlichen Bakterien, Pilzen, Hefen oder Algen in vielen Bereichen eingesetzt. Bekannte Wirkstoffe, die in bioziden Mitteln häufig eingesetzt werden, sind z.B. 5-Chlor-2-Methylisothiazolin-3-on, 2-Methylisothiazolin-3-on, 2-n-Octyl-isothiazolin-3-on, 4,5-Dichlor-2-n-octylisothiazolin-3-on, 1,2-Benzisothiazolin-3-on und N-Alkyl-1,2-Benzisothiazolin-3-on (Alkyl: C₁ - C₁₂), bevorzugt N-Butyl-1,2-Benzisothiazolin-3-on. Trotz anerkannt guter mikrobiozider Wirksamkeit ist diese Wirkstoffklasse der 3-Isothiazolinone mit verschiedenen Nachteilen behaftet. So sind z.B. die 3-Isothiazolinone als eindeutig sensibilisierende Substanzen bekannt. Im Sinne des Verbraucherschutzes ist der Einsatz dieser Wirkstoffe deshalb so niedrig wie möglich zu halten.

Aufgabe der Erfindung war es demnach, mikrobiozide Zusammensetzungen anzugeben, die dadurch verbessert sind, dass ihre Komponenten synergistisch zusammenwirken und deshalb beim gleichzeitigen Einsatz in geringeren Konzentrationen verwendet werden können, verglichen mit den nötigen Konzentrationen im Falle der Einzelkomponenten.

Diese Aufgabe löst die Erfindung durch biozide Wirkstoffkombinationen, umfassend
a) eine wirksame Menge an Tetramethylolacetylendiharnstoff und
b) eine wirksame Menge zweier oder mehrerer biozid wirksamer Substanzen, gewählt aus der Gruppe 2-n-Octyl-isothiazolin-3-on, 4,5-Dichlor-2-n-octylisothiazolin-3-on, 2-Methylisothiazolin-3-on, 1,2-Benzisothiazolin-3-on und der N-(C₁-C₁₂)-Alkyl-1,2-Benzisothiazolin-3-one.

Die erfindungsgemäßen Wirkstoffkombinationen zeigen gegenüber den Einzelwirkstoffen deutlich synergistische Wirkung.

Produkte, insbesondere Dispersionen, bevorzugt Polymerdispersionen, mit einem Gehalt an erfindungsgemäßen Wirkstoffkombinationen sind in vorzüglicher Weise vor Befall von Mikroorganismen bzw. Verderb geschützt und stellen ihrerseits vorteilhafte Ausführungsformen der vorliegenden Erfindung dar.

Eine weitere vorteilhafte Ausführungsform der vorliegenden Erfindung ist die Verwendung von Wirkstoffkombinationen aus
a) einer wirksamen Menge an Tetramethylolacetylendiharnstoff und
b) einer wirksamen Menge mehrerer biozid wirksamer Substanzen, gewählt aus der Gruppe 2-n-Octyl-isothiazolin-3-on, 4,5-Dichlor-2-n-octylisothiazolin-3-on, 2-Methyl-isothiazolin-3-on, 1,2-Benzisothiazolin-3-on und der N-(C₁-C₁₂)-Alkyl-1,2-Benzisothiazolin-3-one zum Schutze von Produkten, insbesondere Dispersionen, vor Befall von Mikroorganismen bzw. Verderb.

Die EP-375367-A2 offenbart Wirkstoffkombinationen aus 2-n-Octyl-4-isothiazolin-3-on sind bestimmten Formaldehyd-abspaltern.

Die US-6,114,366 offenbart Wirkstoffkombinationen aus Formaldehyd abspaltern und bestimmten Isothiazolinonen.

Tetramethylolacetylendiharnstoff (eigentlich: Tetrahydro-1,3,4,6-tetrakis(hydroxymethyl)-imidazo(4,5-d)imidazol-2,5(1H,3H)-dion, CAS-Nr.: 5395-50-6) ist durch die chemische Struktur 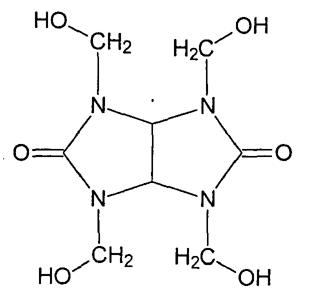 gekennzeichnet.

Es ist bevorzugt, das oder die Isothiazolin-3-one aus der Gruppe 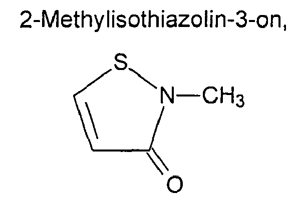 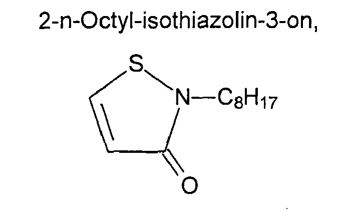 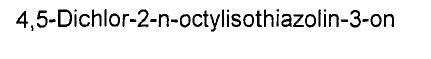 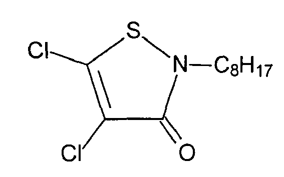 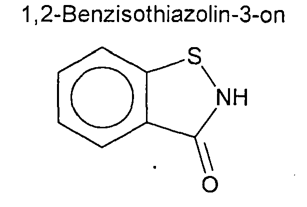 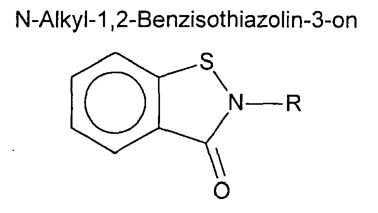 zu wählen.

In erfindungsgemäß vorteilhaften N-Alkyl-1,2-Benzisothiazolin-3-onen bedeutet R = C₁ - C₁₂-Alkyl. Von diesen bevorzugt ist das N-Butyl-1,2-Benzisothiazolin-3-on,

Vorteilhaft können die Gewichtsverhältnisse von a) zu b) aus dem Bereich von 1000 : 1 bis 1 : 10 gewählt werden, bevorzugt 100 : 1 bis 1 : 1, insbesondere bevorzugt 50 : 1 bis 5 : 1.

Vorteilhaft kann die Konzentration der erfindungsgemäßen Wirkstoffkombinationen in den vor Befall bzw. Verderb zu schützenden Produkten, insbesondere Dispersionen, aus dem Bereich von 0,0001 bis 5,0 Gew.-%, bevorzugt 0,01 bis 1,0 Gew.-%, insbesondere bevorzugt 0,05 - 0,5 Gew.-% gewählt werden, bezogen auf das Gesamtgewicht des zu schützenden Produktes.

Es ist zweckmäßig, wenngleich nicht zwingend, die Biozide der erfindungsgemäßen Zusammensetzung in Kombination mit einem polaren oder unpolaren flüssigen Medium einzusetzen. Dabei kann dieses Medium beispielsweise in der Biozidzusammensetzung und/oder in dem zu konservierenden Stoff vorgegeben sein.

Bevorzugte polare flüssige Medien sind Wasser, ein aliphathischer Alkohol mit 1 bis 4 Kohlenstoffatomen, z.B. Ethanol und Isopropanol, ein Glykol, z.B. Ethylenglykol, Diethylenglykol, 1,2-Propylenglykol, Dipropylenglykol und Tripropylenglykol, ein Glykolether, z.B. Butylglykol und Butyldiglykol, ein Glykolester, z.B. Butyldiglykolacetat oder 2,2,4-Trimethylpentandiol-monoisobutyrat, ein Polyethylenglykol, ein Polypropylenglykol, N,N-Dimethylformamid oder ein Gemisch aus solchen Stoffen. Das polare flüssige Medium ist insbesondere Wasser.

Die Wirkstoffe können in gelöster Form und/oder in feindisperser Form in den erfindungsgemäßen Biozidzusammensetzungen vorliegen.

Als unpolare flüssige Medien dienen z.B. Aromaten, vorzugsweise Xylol und Toluol.

Zubereitungen, insbesondere Dispersionen, welche erfindungsgemäße Wirkstoffkombinationen enthalten, sind ebenfalls vorteilhafte Ausführungsformen der vorliegenden Erfindung. Sie können zusätzlich noch einen oder mehrere, weitere biozide Wirkstoffe enthalten, die in Abhängigkeit vom Anwendungsgebiet ausgewählt werden. Spezielle Beispiele für solche zusätzlichen bioziden Wirkstoffe sind nachfolgend angegeben:

Benzylalkohol, 2,4-Dichlorbenzylalkohol, 2-Phenoxyethanol, Phenoxypropanole, Phenylethylalkohol, 5-Brom-5-nitro-1,3-dioxan, Formaldehyd und Formaldehyd-Depotstoffe, Dimethyloldimethylhydantoin, Glyoxal, Glutardialdehyd, Sorbinsäure, Benzoesäure, Salicylsäure, p-Hydroxybenzoesäureester, Chloracetamid, Phenole, wie p-Chlor-m-kresol und o-Phenylphenol, N-Methylolharnstoff, N,N'-Dimethylharnstoff, Benzylalkoholhemiformal, 4,4-Dimethyl-1,3-oxazolidin, 3,3'-Methylen-bis-(5-methyloxazolidine), 1,3,5-Hexahydrotriazinderivate, Quaternäre Ammoniumverbindungen, wie z.B. N-Alkyl-N,N-dimethylbenzylammoniumchlorid und Di-n-decyldimethylammoniumchlorid, Cetylpyridiniumchlorid, Diguanidin, Polybiguanid, 1,2-Dibrom-2,4-dicyanobutan, Ethylenglykolhemiformal, Tetra-(hydroxymethyl)-phosphoniumsalze, 2,2-Dibrom-3-nitrilopropionsäureamid, 3-lod-2-propinyl-N-butylcarbamat, N-Cyclohexyl-2-amino-benzthiophen-S,S-dioxid, N-Aryl-N',N',-dialkylharnstoffderivate wie z.B. Diuron oder Isoproturon, Carbendazim, Benomyl, Thiabendazoi, 4,5-Trimethylen-2-methylisothiazolin-3-on, 2,2'-Dithio-dibenzoesäure-di-N-methylamid, chlorfreie Triazinderivate aus der Reihe der -Methylmercapto-dialkylamino-sym-triazine wie z.B. Terbutryn oder Irgarol 1051, 2-Thiocyanomethylthiobenzthiazol, 2-Hydroxymethyl-2-nitro-1,3-propandiol, 2-Brom-2-nitropropan-1,3-diol, N,N-Bis(3-aminopropyl)dodecylamin, N,N-Bis(3-aminopropyl)-octylamin Methylenbisthiocyanat, Zink-Pyridinthion.

Als solche weiteren bioziden Wirkstoffe sind 3-lod-2-propinyl-N-butylcarbamat, Formaldehyd oder ein Formaldehyd-Depotstoff sowie 2-Brom-2-nitropropan-1,3-diol bevorzugt.

Beispiele für den Formaldehyd-Depotstoff sind

N-Formale, wie z.B. N,N'-Dimethylolharnstoff, N-Methylolharnstoff, Dimethyloldimethylhydantoin.

O-formale, wie z.B. Ethylenglykolhemiformal, Propylenglykolhemiformal, Butyldiglykolhemiformal Benzylalkoholhemiformal.

Die erfindungsgemäße Biozidzusammensetzung kann daneben noch andere übliche Bestandteile enthalten, die dem Fachmann auf dem Gebiet der Biozide als Zusatzstoffe bekannt sind: Es sind dies z.B. Verdickungsmittel, Entschäumer, Stoffe zur Einstellung des pH-Werts, Duftstoffe, Dispergierhilfsmittel und färbende Stoffe.

Die erfindungsgemäße Biozidzusammensetzung kann auf sehr unterschiedliche Gebieten eingesetzt werden. Sie eignet sich beispielsweise für den Einsatz in Anstrichmitteln, Putzen, Ligninsulfonaten, Kreideaufschlämmungen, Klebstoffen, Photochemikalien, caseinhaltigen Produkten, stärkehaltigen Produkten, Bitumenemulsionen, Tensidlösungen, Kraftstoffen, Reinigungsmitteln, kosmetischen Produkten, Wasserkreisläufen, Polymerdispersionen und Kühlschmierstoffen gegen den Befall durch beispielsweise Bakterien, filamentöse Pilze, Hefen und Algen.

Bei der praktischen Anwendung kann die Biozidzusammensetzung entweder als fertiges Gemisch oder durch getrennte Zugabe der Biozide und der übrigen Komponenten der Zusammensetzung in den zu konservierenden Stoff eingebracht werden.

## Patentansprüche

1. Biozide Wirkstoffkombinationen, umfassend
a) eine wirksame Menge an Tetramethylolacetylendiharnstoff und
b) eine wirksame Menge zweier oder mehrerer biozid wirksamer Substanzen, gewählt aus der Gruppe 2-n-Octyl-isothiazolin-3-on, 4,5-Dichlor-2-n-octylisothiazolin-3-on, 2-Methylisothiazolin-3-on, 1,2-Benzisothiazolin-3-on und der N-(C₁-C₁₂)-Alkyl-1,2-Benzisothiazolin-3-one.

2. Verwendung von Wirkstoffkombinationen gemäß Anspruch 1 zum Schutze von Produkten, insbesondere Dispersionen, vor Befall von Mikroorganismen bzw. Verderb.

3. Wirkstoffkombinationen nach Anspruch 1, **dadurch gekennzeichnet, daß** als N-(C₁-C₁₂)-Alkyl-1,2-Benzisothiazolin-3-on das N-Butyl-1,2-Benzisothiazolin-3-on, gewählt wird.

4. Wirkstoffkombinationen nach Anspruch 1, **dadurch gekennzeichnet, daß** die Gewichtsverhältnisse von a) zur b) aus dem Bereich von 1000 : 1 bis 1 : 10 gewählt werden, bevorzugt 100 : 1 bis 1 : 1, insbesondere bevorzugt 50 : 1 bis 5 : 1.

5. Wirkstoffkombinationen nach Anspruch 1 , **dadurch gekennzeichnet, daß** die Konzentration der Wirkstoffkombinationen in den vor Befall bzw. Verderb zu schützenden Produkten, insbesondere Dispersionen bevorzugt Polymerdispersionen, aus dem Bereich von 0,0001 bis 5,0 Gew.-%, bevorzugt 0,01 bis 1,0 Gew.-%, insbesondere bevorzugt 0,05 - 0,5 Gew.-% gewählt werden, bezogen auf das Gesamtgewicht des zu schützenden Produktes.

6. Verwendung nach Anspruch 2, **dadurch gekennzeichnet, daß** als N-(C₁-C₁₂)-Alkyl-1,2-Benzisothiazolin-3-on das N-Butyl-1,2-Benzisothiazolin-3-on, gewählt wird.

7. Verwendung nach Anspruch 2, **dadurch gekennzeichnet, daß** die Gewichtsverhältnisse von a) zur b) aus dem Bereich von 1000 : 1 bis 1 : 10 gewählt werden, bevorzugt 100 : 1 bis 1 : 1, insbesondere bevorzugt 50 : 1 bis 5 : 1.

8. Verwendung nach Anspruch 2, **dadurch gekennzeichnet, daß** die Konzentration der Wirkstoffkombinationen in den vor Befall bzw. Verderb zu schützenden Produkten, insbesondere Dispersionen bevorzugt Polymerdispersionen, aus dem Bereich von 0,0001 bis 5,0 Gew.-%, bevorzugt 0,01 bis 1,0 Gew.-%, insbesondere bevorzugt 0,05 - 0,5 Gew.-% gewählt werden, bezogen auf das Gesamtgewicht des zu schützenden Produktes.

## Claims

1. Biocidal active ingredient combinations comprising
a) an effective amount of tetramethylolacetylenediurea and
b) an effective amount of two or more biocidally effective substances chosen from the group consisting of 2-n-octylisothiazolin-3-one, 4,5-dichloro-2-n-octylisothiazolin-3-one, 2-methylisothiazolin-3-one, 1,2-benzisothiazolin-3-one and N-(C₁-C₁₂)-alkyl-1,2-benzisothiazolin-3-ones.

2. Use of active ingredient combinations according to Claim 1
to protect products, in particular dispersions, against attack by microorganisms and/or spoilage.

3. Active ingredient combinations according to Claim 1, **characterized in that** N-butyl-1,2-benzisothiazolin-3-one is chosen as N-(C₁-C₁₂)-alkyl-1,2-benzisothiazolin-3-one.

4. Active ingredient combinations according to Claim 1, **characterized in that** the weight ratios of a) to b) are chosen from the range from 1000:1 to 1:10, preferably 100:1 to 1:1, particularly preferably 50:1 to 5:1.

5. Active ingredient combinations according to Claim 1, **characterized in that** the concentration of the active ingredient combinations in the products to be protected against attack and/or spoilage, in particular dispersions, preferably polymer dispersions, is chosen from the range from 0.0001 to 5.0% by weight, preferably 0.01 to 1.0% by weight, particularly preferably 0.05-0.5% by weight, based on the total weight of the product to be protected.

6. Use according to Claim 2, **characterized in that** N-butyl-1,2-benzisothiazolin-3-one is chosen as N-(C₁₋C₁₂)-alkyl-1,2-benzisothiazolin-3-one.

7. Use according to Claim 2, **characterized in that** the weight ratios of a) to b) are chosen from the range from 1000:1 to 1:10, preferably 100:1 to 1:1, particularly preferably 50:1 to 5:1.

8. Use according to Claim 2, **characterized in that** the concentration of the active ingredient combinations in the products to be protected against attack and/or spoilage, in particular dispersions, preferably polymer dispersions, is chosen from the range from 0.0001 to 5.0% by weight, preferably 0.01 to 1.0% by weight, particularly preferably 0.05-0.5% by weight, based on the total weight of the product to be protected.

## Revendications

1. Combinaisons d'agents actifs, contenant
a) une quantité efficace de tétraméthylol-acétylène-diurée et
b) une quantité efficace de deux ou plus de deux substances à activité biocide, choisies dans le groupe formé par la 2-n-octyl-isothiazolin-3-one, la 4,5-dichloro-2-n-octylisothiazolin-3-one, la 2-méthylisothiazolin-3-one, la 1,2-benzoisothiazolin-3-one et les N-(C₁-C₁₂)alkyl-1,2-benzoisothiazolin-3-ones.

2. Utilisation de combinaisons d'agents actifs selon la revendication 1 pour la protection de produits, en particulier des dispersions, contre l'attaque de microorganismes ou selon le cas la détérioration.

3. Combinaisons d'agents actifs selon la revendication 1, **caractérisées en ce que** l'on choisit comme N-(C₁-C₁₂)alkyl-1,2-benzoisothiazolin-3-one de la N-butyl-1,2-benzoisothiazolin-3-one.

4. Combinaisons d'agents actifs selon la revendication 1, **caractérisées en ce que** le rapport pondéral de a) à b) est choisi dans la plage de 1000 : 1 à 1 : 10, de préférence de 100 : 1 à 1 : 1, en particulier de 50 : 1 à 5 : 1.

5. Combinaisons d'agents actifs selon la revendication 1, **caractérisées en ce que** les concentrations des combinaisons d'agents actifs dans les produits à protéger de l'attaque ou selon le cas de la détérioration, en particulier des dispersions, de préférence des dispersions de polymères, sont choisies dans la plage de 0,0001 à 5,0 % en poids, de préférence de 0,01 à 1,0 % en poids, plus préférentiellement de 0,05 à 0,5 % en poids, par rapport au poids total du produit à protéger.

6. Utilisation selon la revendication 2, **caractérisée en ce que** l'on choisit comme N-(C₁-C₁₂)-alkyl-1,2-benzoisothiazolin-3-one la N-butyl-1,2-benzoisothiazolin-3-one.

7. Utilisation selon la revendication 2, **caractérisée en ce que** le rapport pondéral de a) à b) est choisi dans la plage de 1000 : 1 à 1 : 10, de préférence de 100 : 1 à 1 : 1, en particulier de 50 : 1 à 5 : 1.

8. Utilisation selon la revendication 2, **caractérisée en ce que** la concentration des combinaisons d'agents actifs dans les produits à protéger de l'attaque ou selon le cas de la détérioration, en particulier des dispersions, de préférence des dispersions de polymères, est choisie dans la plage de 0,0001 à 5,0 % en poids, de préférence de 0,01 à 1,0 % en poids, plus préférentiellement de 0,05 à 0,5 % en poids, par rapport au poids total du produit à protéger.
